Europäisches Patentamt

European Patent Office

Office européen des brevets

(19)

(11) Publication number: **0 117 573**
**A2**

(12) # EUROPEAN PATENT APPLICATION

(21) Application number: **84200119.0**

(22) Date of filing: **31.01.84**

(51) Int. Cl.³: **A 47 G 1/10**

(30) Priority: **01.02.83 NL 8300368**

(43) Date of publication of application: **05.09.84**
**Bulletin 84/36**

(84) Designated Contracting States: **DE FR GB NL**

(71) Applicant: **Mulders, Roland Eduard, Amsteldijk Noord 413, Amstelveen (NL)**
Applicant: **Kwakkel, Johan, Maggelhaen Straat 22, Amsterdam (NL)**

(72) Inventor: **Mulders, Roland Eduard, Amsteldijk Noord 413, Amstelveen (NL)**
Inventor: **Kwakkel, Johan, Maggelhaen Straat 22, Amsterdam (NL)**

(74) Representative: **Kupecz, Arpad et al, Octrooibureau Los en Stigter B.V. Postbox 20052, NL-1000 HB Amsterdam (NL)**

(54) **Connection method for frame profiles.**

(57) At the mitre-angle of a frame the abutting frame parts are fastened together by inserting the legs of an angle into box sections made on the respective frame parts and interposing between each leg and the respective box parts a clamping body having chamfered ends and finally rotating the clamping body so that it becomes wedged between the leg and the respective box parts to establish a clamping action which tightly connects the frame part and the angle together.

Connection method for frame profiles.

The invention relates to a clamping system which assembles each angle of a frame in an economical and reliable manner.

Frames generally have two characteristics. Firstly, the frame should esthetically satisfy and secondly, the frame should be strong. Frames made of a aluminium unlike wooden frames cannot be nailed or glued. The profile of an aluminium frame hence is made up of two parts. Firstly, there is the part which defines the esthetical shape and secondly, there is the part which makes possible the connection of the frame parts.

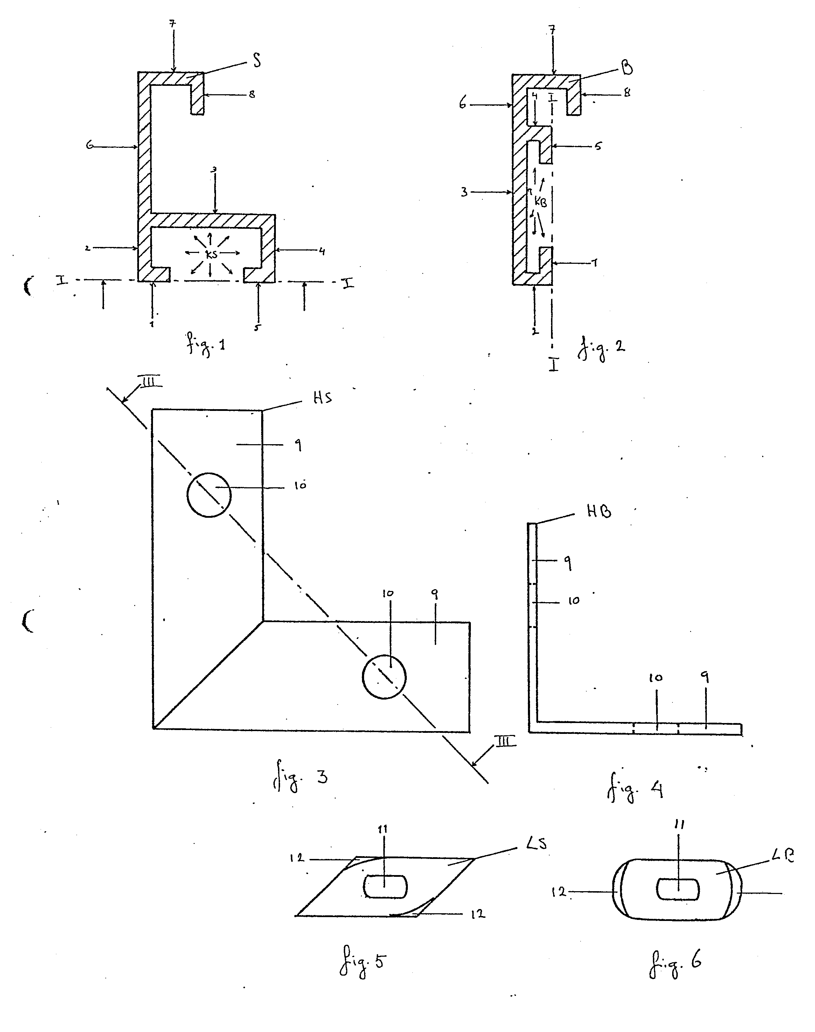

Two much occurring embodiments have been drawn in the figures 1 and 2, respectively.

To assemble each mitre angle one often uses an auxiliary guide consisting of two parts perpendicularly disposed to each other. The fastening of this auxiliary angle is possible in various manners. Many manners, however, require such a deformation of the frame that dissassembly is no longer possible without so heavily damaging the frame that it no longer esthetically satisfies; such a manner is described in the Dutch patent application number 77.00154.

A good manner of fastening the angle is clamping so strongly that it does no longer get loose during normal use. Existing embodiments, however, are not simple or costly in production or assembly; such an embodiment is described in the patent application number 69.10487 originated from the USA.

This invention has the object of removing the disadvantages of existing embodiments without detracting from the advantages of a clamping system.

The invention does so by completely filling in the space of the open box being part of the profile of the said frame by a small rotation of a body whereby the said angle is very strongly clamped to be fixed in the box.

The invention will now be further explained by way of two examples of embodiments wherein:

fig. 1 representing a cross-section of a frame profile S, made of aluminium, being a frame which can be disassembled;

fig. 2 representing a cross-section of a frame profile B, made of aluminium, being an exchange frame which cannot be disassembled;

fig. 3 representing the plan view of an angle HS, made of zinked steel, having the legs perpendicularly disposed to each other in the plane of the width of the angle;

fig. 4 representing the plan view of an angle HB, made of zinked steel, having the legs perpendicularly disposed to each other in the plane of the thickness of the angle;

fig. 5 representing the plan view of a body LS, made of stainless steel;

fig. 6 representing the plan view of a body LB, made of stainless steel;

fig. 7 representing the view of the assembly of the said parts of the figures 1, 3 and 5, wherein one in a plane perpendicularly above the frame looks against the line I-I of figure 1; the frame then has not yet the definite strength;

fig. 8 representing the cross-section according to line II-II of figure 7;

fig. 9 representing the situation of fig. 7 on the understanding that the frame now indeed has the strength which is necessary for normal use;

fig. 10 representing the view of the assembly of said parts of the figures 2, 4 and 6, wherein one in the plane of the frame looks against the line I-I of fig. 2; the frame then has not yet the definite strength;

fig. 11 representing the cross-section according to line II-II of fig. 10;

fig. 12 representing the situation of fig. 10 on the understanding that the frame now indeed has the strength which is necessary for normal use;

fig. 13 representing the cross-section according to line III-III of figure 3;

fig. 14 representing the side-view of a tool piece, further mentioned wrench, which can be used in assembling the frame instead of a screw-driver.

The frame work for a frame mainly consists of four frame strips, which have been connected in the angles.

Two embodiments of the profile of these frame strips have been drawn in the figures 1 and 2, respectively.

Of these profiles the parts 6, 7 and 8 mainly define the esthetical appearance. The parts 1 up to and including 5 mainly define the connection of two frame strips to each other and hence the strength of the frame.

To establish the connection, the legs 9 of the angle HS and HB, respectively, are inserted into the open box KS and KB, respectively, formed by the parts 1 up to and including 5 of the profiles S and B, respectively. Then, the bodies LS and LB, respectively, are placed hereabove in such manner that the slots 11 of the body are centered above the holes 10 of the legs 9.

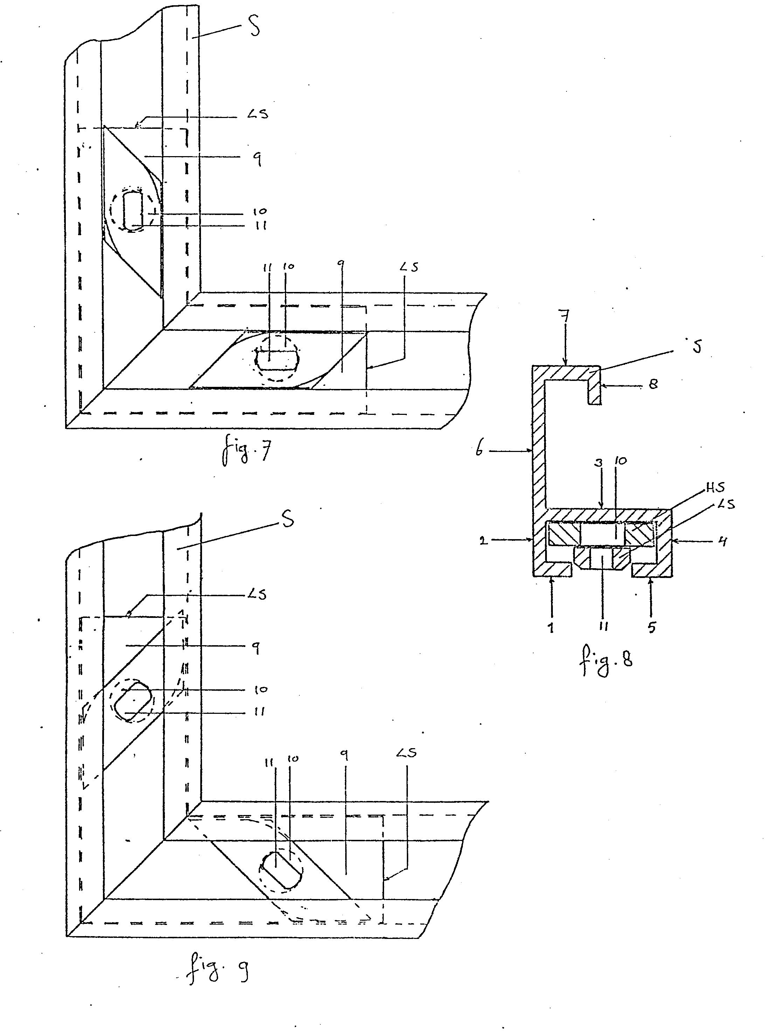

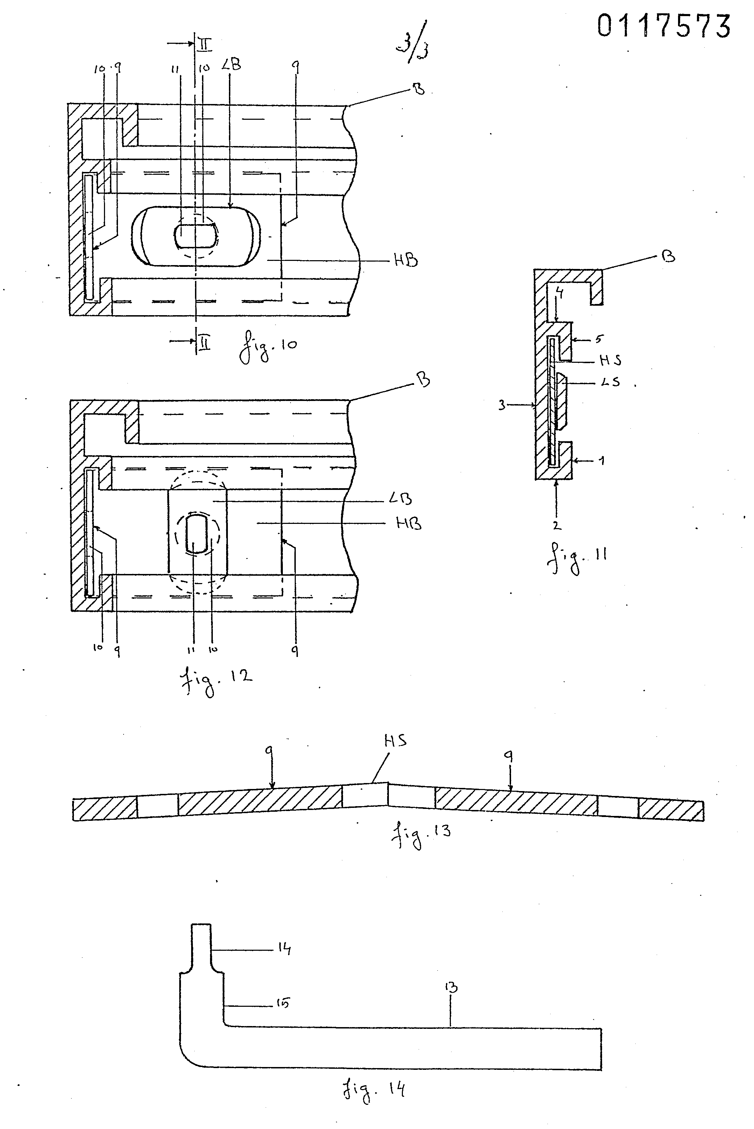

This situation has been drawn in the figures 7 and 10, respectively. From figure 8 , 11, respectively, it clearly appears that the total thickness of the angle HS, HB, respectively, and the body LS, LB, respectively, is too great for the box KS, KB, respectively. Also it appears that the ends 12 of the body LS, LB, respectively, have been somewhat chamfered.

It is now possible to rotate the body LS, LB, respectively, in such manner that said parts 12 wedge themselves between the parts 1 and 5 of the profile S, B, respectively, and the angle HS, HB, respectively. Thereby the angle HS, HB, respectively, is tightly clamped in the box KS, KB, respectively.

The rotation of body LS, LB, respectively, is done in principle with a screw-driver. When desired, a wrench can be used, of which an embodiment has been drawn in figure 14.

Part 13 of this wrench serves as a handle.

Part 14 has a shape fitting in the slot 12 of body LS, LB, respectively.

Part 15 should be as short as possible to prevent that the wrench slips out of said slot during the rotation of said body; this part thus also serves as a rotary shaft during the rotation.

Hole 10 in the legs 9 of the angle HS, HB, respectively, guides the screw-driver or wrench during the rotation. Thereby one is sure that the body LS, LB, respectively, does not slide or slides a very small amount relative to said legs.

To prevent the angle of a frame from being open, i.e. not being closed throughout the mitre length, it is recommended to somewhat change the shape of the angle HS. It is proposed not to take the legs 9 in the same plane of the direction of the thickness of the angle. An embodiment has been drawn in figure 13. In practice, a deviation of only a few degrees appears to be sufficient.

Other embodiments are possible within the scope of the invention. Notably, there can be experimented with other materials. Also there can be experimented with the shape of body LS, LB, respectively and with the shape of angle HS, HB, respectively.

0117573

## C l a i m s.

1. Connection method for fastening together each two abutting ends of the parts of a frame for enclosing a definite area by using a connection piece being an angle having two perpendicularly disposed legs, which angle is inserted into an open box being part of the profile of said parts of a frame, characterized in that said connection piece effects said fastening by clamping action in said box through rotation of a plate-like body which for that purpose has been centered above holes which for that purpose have been provided in the legs of said connection piece.

2. Connection method of claim 1, wherein the connection piece as mentioned in claim 1 is provided with holes, characterized in that said holes during the rotation of said body guide the tool required for the rotation of the body as mentioned in claim 1, whereby said body establishes the clamping action according to claim 1 in a position defined by said holes.

3. A tool as mentioned in claim 2, characterized in that the end fitting in the slot of the body as mentioned in claim 1 serves as a rotary shaft of said body.

4. Connection piece as mentioned in claim 1, characterized in that the legs of said connection piece have been somewhat bent in the direction of the thickness of the material whereby the part of the mitre angle being in sight closes completely.

fig. 1

fig. 2

fig. 3

fig. 4

fig. 5

fig. 6

fig. 7

fig. 8

fig. 9

0117573

3/3

fig. 10

fig. 11

fig. 12

fig. 13

fig. 14